(19) Europäisches Patentamt
European Patent Office
Office européen des brevets

(11) **EP 3 679 391 B1**

(12) **EUROPÄISCHE PATENTSCHRIFT**

(45) Veröffentlichungstag und Bekanntmachung des Hinweises auf die Patenterteilung:
**02.11.2022 Patentblatt 2022/44**

(21) Anmeldenummer: **18740203.7**

(22) Anmeldetag: **12.07.2018**

(51) Internationale Patentklassifikation (IPC):
*G01S 7/00* (2006.01)    *G01S 13/93* (2020.01)
*G01S 7/40* (2006.01)    *G01S 13/87* (2006.01)
*G01S 13/58* (2006.01)    *G01S 13/34* (2006.01)
*G01S 7/35* (2006.01)    *G01S 13/931* (2020.01)

(52) Gemeinsame Patentklassifikation (CPC):
**G01S 13/87; G01S 7/003; G01S 7/352; G01S 7/354; G01S 7/356; G01S 13/343; G01S 13/584;** G01S 7/4021; G01S 13/931

(86) Internationale Anmeldenummer:
**PCT/EP2018/068870**

(87) Internationale Veröffentlichungsnummer:
**WO 2019/048110 (14.03.2019 Gazette 2019/11)**

(54) **FMCW-RADARSENSOR MIT SYNCHRONISIERTEN HOCHFREQUENZBAUSTEINEN**

FMCW RADAR SENSOR HAVING SYNCHRONIZED HIGH-FREQUENCY MODULES

CAPTEUR RADAR À MODULATION DE FRÉQUENCE D'ONDES CONTINUES (FMCW) POURVU DE MODULES À HAUTE FRÉQUENCE SYNCHRONISÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.09.2017 DE 102017215561**

(43) Veröffentlichungstag der Anmeldung:
**15.07.2020 Patentblatt 2020/29**

(73) Patentinhaber: **Robert Bosch GmbH**
**70442 Stuttgart (DE)**

(72) Erfinder:
• **MAYER, Marcel**
**89173 Lonsee (DE)**
• **BAUR, Klaus**
**88487 Mietingen (DE)**
• **SCHOOR, Michael**
**70195 Stuttgart (DE)**

(56) Entgegenhaltungen:
**WO-A1-2018/158281     DE-T2- 69 612 252**

# EP 3 679 391 B1

## Beschreibung

Die Erfindung betrifft einen FMCW-Radarsensor mit mehreren Hochfrequenzbausteinendie durch ein Synchronisationssignalmiteinander synchronisiert sind und mindestens zwei räumlich voneinander getrennte Hochfrequenzbausteine umfassen, die jeweils einen Sendeteil zum Senden eines in seiner Frequenz modulierten Sendesignals und/oder einen Empfangsteil zum Empfang eines Radarechos aufweisen, wobei mindestens zwei der Hochfrequenzbausteine jeweils einen Empfangsteil aufweisen und jedem Empfangsteil ein Mischer, der durch Mischen des empfangenen Signals mit einem Anteil des Sendesignals ein Zwischenfrequenzsignal erzeugt, und eine Auswerteeinheit zugeordnet sind und die Auswerteeinheit dazu ausgebildet ist, das Zwischenfrequenzsignal über eine Messperiode als Funktion der Zeit aufzuzeichnen und das so erhaltene Zeitsignal einer Fouriertransformation zu unterziehen.

Stand der Technik

In bekannten FMCW-Radarsensoren wird die Frequenz des Sendesignals rampenförmig moduliert. Im Empfangsteil erhält man durch Mischen des empfangenen Signals mit dem Sendesignal ein Zwischenfrequenzsignal, dessen Frequenz vom Frequenzunterschied zwischen dem aktuell gesendeten Signal und dem empfangenen Signal abhängig ist. Aufgrund der rampenförmigen Modulation ist dieser Frequenzunterschied von der Laufzeit der Radarwellen vom Sensor zum Objekt und zurück zum Sensor abhängig. Durch Fouriertransformation erhält man ein Spektrum des Zwischenfrequenzsignals, in dem sich jedes geortete Objekt als ein Peak bei einer vom Abstand des Objekts abhängigen Frequenz abzeichnet. Aufgrund des Doppler-Effekts ist die Frequenzlage des Peaks allerdings auch von der Relativgeschwindigkeit des Objekts abhängig.

Um die abstands- und geschwindigkeitsabhängigen Anteile voneinander zu trennen ist es bekannt, nacheinander mehrere Frequenzrampen mit unterschiedlicher Steigung zu fahren. Da nur der abstandsabhängige Anteil der Frequenz von der Rampensteigung abhängig ist, lassen sich durch Vergleich der auf den verschiedenen Rampen erhaltenen Frequenzlagen der Abstand und die Relativgeschwindigkeit des Objekts bestimmen.

Der Umstand, dass die Messperiode, über die das Zeitsignal aufgezeichnet wird, nur eine begrenzte Länge haben kann, führt dazu, dass bei der Fouriertransformation Artefakte in der Form von Nebenmaxima erzeugt werden, die die Interpretation des Signals erschweren. Es ist bekannt, beispielsweise aus DE 696 12 252 T2, solche Nebenmaxima dadurch weitgehend zu unterdrücken, dass das Zeitsignal vor der Fouriertransformation mit einer geeigneten Fensterfunktion "gefenstert" wird, beispielsweise indem das Zeitsignal mit einer ebenfalls zeitabhängigen Fensterfunktion multipliziert wird. Die Fensterfunktion, beispielsweise ein sogenanntes Hamming-Fenster, hat in erster Linie die Wirkung, dass die abrupten Übergänge im Zeitsignal am Beginn und am Ende der Messperiode geglättet und dadurch die Nebenmaxima gemildert werden.

Radarsensoren dieser Art werden bereits in weitem Umfang als sensorische Komponenten in Fahrerassistenzsystemen für Kraftfahrzeuge eingesetzt. Im Zuge einer Weiterentwicklung der Fahrerassistenzsysteme in Richtung hochautonomes Fahren werden an die Leistungsfähigkeit der Radarsensoren zunehmend höhere Anforderungen gestellt. Ein vergleichsweise kostengünstiger Weg, diese Anforderungen zu erfüllen, besteht darin, dass man, statt neue und leistungsfähigere Komponenten zu entwickeln, mehrere Komponenten desselben Typs parallel zueinander arbeiten lässt. Das erlaubt es, auf bereits vorhandene und in Serie gefertigte Komponenten zurückzugreifen, setzt allerdings voraus, dass die mehreren Hochfrequenzbausteine präzise miteinander synchronisiert werden.

Da die verschiedenen Hochfrequenzbausteine notwendig einen gewissen räumlichen Abstand zueinander aufweisen müssen, erweist sich eine hinreichend genaue Synchronisation angesichts der unvermeidlichen Signallaufzeit des Synchronisationssignals von einem Baustein zum anderen jedoch als schwierig. Zwar ist es unter Umständen möglich, Laufzeitunterschiede durch symmetrische Anordnung der Bausteine oder durch Umwegleitungen zu vermeiden, doch erfordert dies einen nicht unbeträchtlichen Aufwand sowie einen erhöhten Platzbedarf auf der Platine. Das gilt insbesondere in den Fällen, in denen auch der Baustein, der als Master das Synchronisationssignal erzeugt, mit den übrigen Bausteinen (Slaves) synchronisiert werden soll. Im Master muss dann das lokal erzeugte Synchronisationssignal künstlich verzögert werden.

Offenbarung der Erfindung

Aufgabe der Erfindung ist es, bei einem Radarsensor der eingangs genannten Art eine einfachere Synchronisation der mehreren Hochfrequenzbausteine zu ermöglichen.

Diese Aufgabe wird erfindungsgemäß dadurch gelöst, dass mindestens eine der Auswerteeinheiten dazu ausgebildet ist, zum Ausgleich eines Laufzeitunterschieds des Synchronisationssignals zwischen den Empfangsteilen, das Zeitsignal vor der Fouriertransformation mit einer komplexwertigen Fensterfunktion zu fenstern.

Die Erfindung nutzt eine Eigenschaft der Fouriertransformation aus, die darin besteht, dass sich durch eine geeignete komplexwertige Fensterfunktion erreichen lässt, dass sich das durch die Fouriertransformation erhaltene Spektrum um einen einstellbaren Betrag auf der Frequenzachse verschiebt. Wenn das Sendesignal von einem Baustein gesendet und von einem anderen Baustein empfangen wird, so führt die Signallaufzeit des Synchronisationssignals von dem einen Baustein zum anderen beim Mischen des empfangenen Signals mit dem Sendesignal (das seinerseits mit dem Synchronisationssignal synchron ist) zu einem Frequenzunterschied, der sich auf das Spektrum des Zwischenfrequenzsignals ähnlich auswirkt wie eine geänderte Signallaufzeit der Radarwellen, und der somit eine Änderung des Objektabstands vortäuscht. Da sich nun die durch die Fensterfunktion erreichte Frequenzverschiebung des Peaks im Spektrum ebenfalls als (scheinbare) Änderung des Objektabstands interpretieren lässt (der Einfluss des Dopplereffekts bei nicht verschwindender Relativgeschwindigkeit braucht hier nicht berücksichtigt zu werden), lässt sich die Signallaufzeit des Synchronisationssignals durch eine geeignete Frequenzverschiebung mittels der Fensterfunktion kompensieren, ohne dass aufwendige Maßnahmen zur Angleichung der Lauflängen des Synchronisationssignals zu den einzelnen Bausteinen erforderlich sind.

Vorteilhafte Ausgestaltungen und Weiterbildungen der Erfindung sind in den Unteransprüchen angegeben.

In einer Ausführungsform wird einer der Hochfrequenzbausteine als Master betrieben, während ein oder mehrere weitere Hochfrequenzbausteine als Slaves arbeiten. Dabei können sowohl der Master als auch die Slaves jeweils einen Sendeteil und einen Empfangsteil aufweisen, so dass zwischen Betriebsarten gewechselt werden kann, in denen der Master oder einer der Slaves das Sendesignal sendet. Die Radarechos können dann von allen Hochfrequenzbausteinen empfangen werden, also auch von dem Baustein, der das Sendesignal gesendet hat. Der Synchronisationsfehler kann jeweils bei dem Baustein kompensiert werden, der das Radarecho empfängt aber nicht selbst sendet.

Die Erfindung ist auch bei einer Konfiguration anwendbar, bei der ein einzelner Hochfrequenzbaustein Signale empfängt, die von verschiedenen, räumlich voneinander getrennten Hochfrequenzbausteinen gesendet wurden (mit Signaltrennung beispielsweise im Zeit-, Code- oder Frequenzmultiplex).

Im folgenden wird ein Ausführungsbeispiel anhand der Zeichnung näher erläutert.

Es zeigen:

Fig. 1   ein Blockdiagramm der wesentlichen Komponenten eines erfindungsgemäßen Radarsensors;

Fig. 2   ein Zeitdiagramm zur Illustration der Frequenzmodulation beim einem FMCW-Radar;

Fig. 3   Beispiele für Zeitsignale, die in verschiedenen Hochfrequenzbausteinen des Radarsensors nach Fig. 1 empfangen werden; und

Fig. 4   Spektren der Zeitsignale nach Fig. 3.

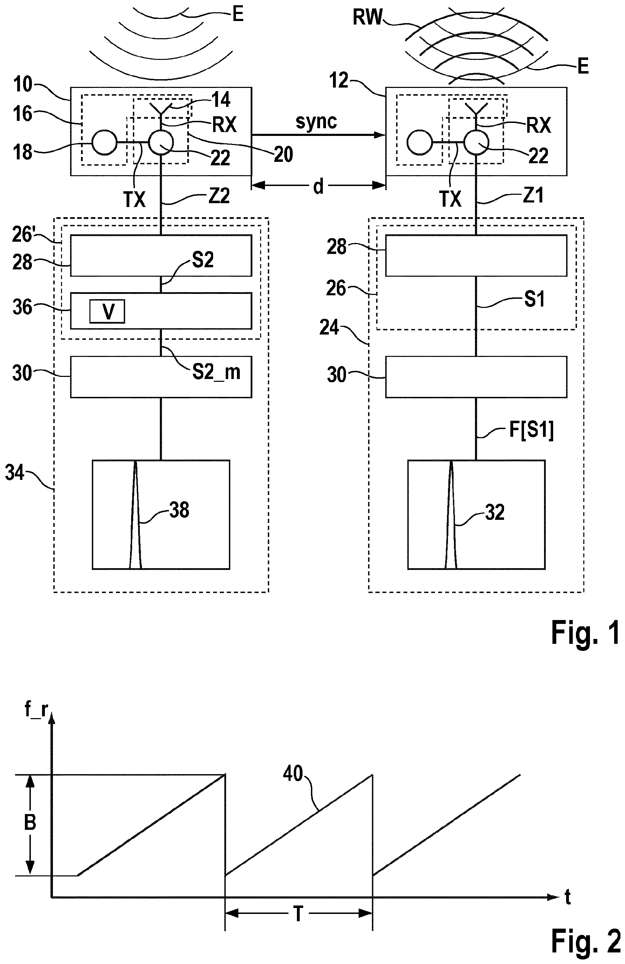

Der in Fig. 1 gezeigte Radarsensor weist zwei baugleiche Hochfrequenzbausteine 10, 12 auf, die jeweils eine Antennenanordnung 14, einen Sendeteil 16 mit einem lokalen Oszillator 18, und einen Empfangsteil 20 mit einem Mischer 22 enthalten. Die Antennenanordnung 14 dient sowohl zum Senden als auch zum Empfangen von Radarwellen und ist somit gemeinsamer Bestandteil des Sendeteils 16 und des Empfangsteils 20. Im gezeigten Beispiel arbeitet der Hochfrequenzbaustein 10 als Master und der Hochfrequenzbaustein 12 als Slave. Der Master erzeugt ein Synchronisationssignal sync, das an den als Slave arbeitenden Hochfrequenzbaustein 12 (und gegebenenfalls an weitere Slaves) übermittelt wird. Der lokale Oszillator 18 im Hochfrequenzbaustein 12 (Slave) erzeugt ein frequenzmoduliertes Sendesignal TX mit einem rampenförmigen Modulationsschema, das mit dem Synchronisationssignal sync synchronisiert ist, und übermittelt dieses Sendesignal TX (im gezeigten Beispiel über dem Mischer 22) an die Antennenanordnung 14, so dass Radarwellen RW abgestrahlt werden. Das von einem nicht gezeigten Objekt reflektierte Radarecho E wird von der Antennenanordnung im Hochfrequenzbaustein 12 empfangen. Ein empfangenes Signal RX wird im Mischer 22 mit einem Anteil des Sendesignals TX gemischt, wodurch ein Zwischenfrequenzsignal Z1 erzeugt wird, das an eine Auswerteeinheit 24 ausgegeben wird.

Die Auswerteeinheit 24 enthält eine Vorverarbeitungsstufe 26 mit einem Zeitsignalmodul 28, in dem das Zwischenfrequenzsignal Z1 digitalisiert und über eine bestimmte Messperiode als Funktion der Zeit aufgezeichnet wird. Auf diese Weise wird ein digitales Zeitsignal S1 gebildet, das an ein Fouriertransformationsmodul 30 der Auswerteeinheit 24 übergeben und dort durch Fouriertransformation in ein Spektrum F[S1] umgewandelt wird. Das Spektrum ist in Fig. 1 auch graphisch dargestellt und enthält einen einzelnen Peak 32, dessen Frequenzlage den Abstand des georteten Objekts angibt (der Einfachheit halber soll hier angenommen werden, dass die Relativgeschwindigkeit des Objekts null ist, so dass keine Dopplerverschiebung vorliegt).

Der als Master arbeitende Hochfrequenzbaustein 10 dient in diesem Beispiel nicht zum Senden, sondern nur zum Empfang des Radarechos E. Der lokale Oszillator 18 im Hochfrequenzbaustein 10 erzeugt das Sendesignal TX, das in der gleichen Weise frequenzmoduliert ist wie im Hochfrequenzbaustein 12, wobei das Modulationsschema mit dem Synchronisationssignal sync synchronisiert ist, das in dem Hochfrequenzbaustein 10 lokal erzeugt wird. Das Sendesignal TX wird in diesem Fall jedoch nicht an die Antennenanordnung 14 weitergeleitet sondern wird lediglich im Mischer 22 mit dem Empfangssignal RX gemischt, so dass man auch hier ein Zwischenfrequenzsignal Z2 erhält, das bei perfekter Synchronisation mit dem Zwischenfrequenzsignal Z1 identisch sein sollte.

Das Zwischenfrequenzsignal Z2 gelangt an eine Vorverarbeitungsstufe, die hier mit 26' bezeichnet ist und sich von der Vorverarbeitungsstufe 26 nur dadurch unterscheidet, dass dem Zeitsignalmodul 28 ein Fenstermodul 36 nachgeschaltet ist, in dem das aus dem Zwischenfrequenzsignal Z2 erzeugte Zeitsignal S2 mit einer Fensterfunktion V gefenstert wird. Dadurch wird ein modifiziertes Zeitsignal S2_m gebildet, das dann im Fouriertransformationsmodul 30 der Fouriertransformation unterzogen wird. Das auf diese Weise erhaltene Spektrum

F[S2_m] soll im Idealfall mit dem im Hochfrequenzbaustein 12 erhaltenen Spektrum F[S1] identisch sein und somit einen Peak 38 zeigen, dessen Frequenzlage mit der des Peaks 32 übereinstimmt. Unter dieser Voraussetzung kann man die in den beiden (oder mehreren) Hochfrequenzbausteinen erhaltenen Spektren einer kombinierten Auswertung unterziehen, um eine größere Leistungsfähigkeit des Radarsensors zu erreichen. Beispielsweise können die beiden Spektren addiert werden, um das Signal/Rausch-Verhältnis zu verbessern.

Eine Komplikation ergibt sich jedoch daraus, dass zwischen den beiden Hochfrequenzbausteinen 10, 12 unvermeidlich ein gewisser räumlicher Abstand besteht, so dass das Synchronisationssignal sync vom Master zum Slave einen gewissen Signalweg d zurücklegen muss. Dementsprechend ist das Synchronisationssignal, wenn es am Hochfrequenzbaustein 12 eintrifft, um eine Signallaufzeit d/c verzögert (c ist die Ausbreitungsgeschwindigkeit des Synchronisationssignals). Diese Verzögerung führt zu einem Synchronisationsfehler zwischen den Modulationsmustern der Sendesignale TX in den beiden Hochfrequenzbausteinen.

In Fig. 2 ist ein (vereinfachtes) Beispiel eines Modulationsschemas gezeigt. Die Frequenz f_r des Sendesignals ist hier als Funktion der Zeit t dargestellt und weist eine Folge von Modulationsrampen 40 mit einer Rampensteigung B/T auf, wobei B der Frequenzhub und T die Dauer der Modulationsrampe ist. Diese Dauer T ist zugleich auch die Dauer der Messperiode über die das Zeitsignal im Zeitsignalmodul 28 aufgezeichnet wird.

Im Hochfrequenzbaustein 12, der hier als Sender arbeitet, ist der Beginn jeder Modulationsrampe 40 gegenüber dem Beginn der Modulationsrampe im Hochfrequenzbaustein 10 um die Signallaufzeit d/c verzögert. Da in beiden Hochfrequenzbausteinen 10, 12 dasselbe Empfangssignal RX empfangen wird, dieses Signal jedoch mit gegeneinander zeitversetzten Sendesignalen TX gemischt wird, ist die Frequenz des Zeitsignals S2 im Hochfrequenzbaustein 10 nicht allein durch den Abstand des georteten Objekts und die entsprechende Signallaufzeit der Radarwellen bestimmt, sondern sie enthält noch einen zusätzlichen Anteil, der dadurch bedingt ist, dass die Modulationsrampe 40 im Hochfrequenzbaustein 10 schon um die Zeit d/c früher begonnen hat. Das Fenstermodul 36 in der Auswerteeinheit 26' für den Hochfrequenzbaustein 10 hat den Zweck, diesen Frequenzversatz auszugleichen.

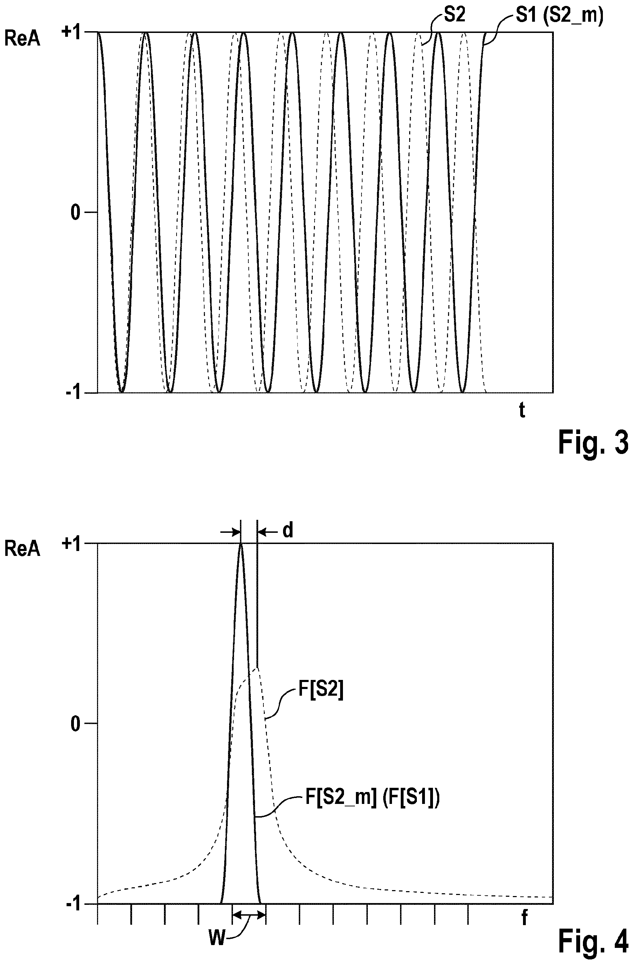

In Fig. 3 sind die Zeitsignale S1 und S2 als Funktionen der Zeit t dargestellt. Auf der vertikalen Achse ist hier nur der Realteil ReA der normierten (komplexen) Amplitude A angegeben. Man erkennt, dass die Frequenz des Zeitsignals S2 aufgrund des oben beschriebenen Synchronisationsfehlers gegenüber der Frequenz des Zeitsignals S1 erhöht ist. Im Fenstermodul 36 wird dieser Frequenzversatz wieder rückgängig gemacht, so dass im Idealfall das modifizierte Zeitsignal S2_m mit dem Zeitsignal S1 übereinstimmt. Dazu wird im Fenstermodul 36 das Zeitsignal S2, also die zeitabhängige Funktion S2(t) mit einer gleichfalls zeitabhängigen Fensterfunktion

$$V(t) = \exp(-j * 2 * pi * (1/T) * (t - x) * b) \qquad (1)$$

multipliziert. Darin ist j die Wurzel aus (-1), pi ist die Kreiszahl, T ist die Dauer der Messperiode und zugleich die Rampendauer, b ist ein sogenannter Binversatz, der so gewählt wird, dass der Synchronisationsfehler ausgeglichen wird, und x ist ein beliebiger Wert aus dem Intervall [0, T], der eine konstante Phasenverschiebung bewirkt. Als vorteilhaft hat sich x = T/2 erwiesen.

Bei der Fensterfunktion V(t) handelt es sich um eine komplexwertige Funktion, deren Betrag konstant den Wert 1 hat und deren Phase proportional zur Zeit t und zu dem Binversatz b ist. Der Ausdruck "Binversatz" resultiert daraus, dass der Bereich der Frequenzen f, auf dem die Spektren F[S2_m] und F[S1] definiert sind, in eine Vielzahl (beispielsweise 512) Bins unterteilt ist, die jeweils eine Binbreite W = c/2B haben, wie in Fig. 4 gezeigt ist.

In Fig. 4 ist zum Vergleich auch ein Spektrum F[S2] gezeigt, das man durch Fouriertransformation des Zeitsignals S2 erhalten würde, also ohne Fensterung mit der Fensterfunktion V. Man erkennt, dass der entsprechende Peak im Spektrum bei einer etwas höheren Frequenz liegt als der Peak in den Spektren F[S2_m] und F[S1], übereinstimmend mit dem Frequenzunterschied, der auch in Fig. 3 zu erkennen ist.

Es ist zu bemerken, dass die Binbreite W die Dimension einer Länge hat, während auf der horizontalen Achse in Fig. 4 die Frequenz f als unabhängige Variable angegeben ist. Für das Radarecho eines Objekts mit dem Objektabstand D ist die Frequenz f, bei der der von dem Objekt herrührende Peak liegt, ist jedoch gegeben durch

$$f = (B/T)*2D/c \qquad (2)$$

Die Frequenz f kann somit auch als Maß für den Objektabstand D betrachtet werden. Die in Fig. 4 gezeigten Frequenzbins sind deshalb äquivalent zu Abstandsbins mit der Binbreite W.

Der Binversatz b ist gegeben durch das Verhältnis zwischen der Lauflänge d des Synchronisationssignals und der Binbreite W also

$$b = d/W = d*2B/c \qquad\qquad (3)$$

Unter diesen Bedingungen ist der Frequenzversatz zwischen den Peaks in den Spektren F[S2] und F[S2_m] äquivalent zu einer scheinbaren Änderung des Objektabstands D, die gleich der Lauflänge d ist. Folglich fällt das Spektrum F[S2_m] in Fig. 4 im wesentlichen mit dem im anderen Frequenzbaustein erhaltenen Spektrum F[S1] zusammen, so dass der Synchronisationsfehler kompensiert wird.

In einer praktischen Ausführungsform wird auch die Vorverarbeitungsstufe 26, die dem Hochfrequenzbaustein 12 zugeordnet ist, ein Fenstermodul 36 enthalten. Die Fensterfunktion V kann neben dem in Gleichung (1) angegebenen komplexen Phasenfaktor auch einen reellen Faktor enthalten, der zur Unterdrückung von Nebenmaxima dient. Die Fenstermodule in den beiden Vorverarbeitungsstufen können dann jeweils zwischen einem Fenster mit komplexem Phasenfaktor und einem reellen Fenster ohne diesen Faktor umgeschaltet werden, je nach dem, ob ein Synchronisationsfehler korrigiert werden muss oder nicht. So lässt sich beispielsweise auch ein Betriebsmodus realisieren, bei dem der Master, also der Hochfrequenzbaustein 10, sendet und empfängt, während der Slave, also der Hochfrequenzbaustein 12, ausschließlich empfängt. In dem Fall würde der komplexe Phasenfaktor beim Hochfrequenzbaustein 10 deaktiviert und beim Hochfrequenzbaustein 12 aktiviert.

Ebenso wäre - bei entsprechender Anpassung der Fensterfunktion - auch ein Betriebsmodus denkbar, bei dem der Hochfrequenzbaustein 12 den Master und der Hochfrequenzbaustein 10 den Slave bildet.

Das Synchronisationssignal sync könnte grundsätzlich auch unmittelbar durch das vom Master erzeugte Sendesignal TX gebildet werden. Wenn der Slave sendet, würde er dann einfach das vom Master erhaltene Synchronisationssignal als Sendesignal an die Antennenanordnung 14 weiterleiten. Der Slave brauchte dann keinen eigenen lokalen Oszillator aufzuweisen.

**Patentansprüche**

1. FMCW-Radarsensor mit mehreren Hochfrequenzbausteinen (10,12), die durch ein Synchronisationssignal (sync) miteinander synchronisiert sind und mindestens zwei räumlich voneinander getrennte Hochfrequenzbausteine (10, 12) umfassen, die jeweils einen Sendeteil (16) zum Senden eines in seiner Frequenz modulierten Sendesignals (TX) und/oder einen Empfangsteil (20) zum Empfang eines Radarechos (E) aufweisen, wobei mindestens zwei der Hochfrequenzbausteine jeweils einen Empfangsteil aufweisen und jedem Empfangsteil (20) ein Mischer (22), der durch Mischen des empfangenen Signals (RX) mit einem Anteil des Sendesignals (TX) ein Zwischenfrequenzsignal (Z1, Z2) erzeugt, und eine Auswerteeinheit (24, 34) zugeordnet sind und die Auswerteeinheit (24, 34) dazu ausgebildet ist, das Zwischenfrequenzsignal (Z1, Z2) über eine Messperiode (T) als Funktion der Zeit (t) aufzuzeichnen und das so erhaltene Zeitsignal (S1, S2) einer Fouriertransformation zu unterziehen, **dadurch gekennzeichnet, dass** mindestens eine (34) der Auswerteeinheiten dazu ausgebildet ist, zum Ausgleich eines Laufzeitunterschieds des Synchronisationssignals (sync) zwischen den Empfangsteilen (20), das Zeitsignal (S1) vor der Fouriertransformation mit einer komplexwertigen Fensterfunktion (V) zu fenstern.

2. Radarsensor nach Anspruch 1, bei dem mindestens zwei Hochfrequenzbausteine (10,12) sowohl einen Sendeteil (16) als auch einen Empfangsteil (20) aufweisen und die zugehörigen Auswerteeinheiten (24, 34) jeweils ein Fenstermodul (36) aufweisen, das zwischen der komplexwertigen Fensterfunktion und einer rein reellen Fensterfunktion umschaltbar ist.

3. Radarsensor nach Anspruch 1 oder 2, bei dem die Fensterung in einer Multiplikation des Zeitsignals (S2) mit einer zeitabhängigen Fensterfunktion (V) besteht, die - wahlweise neben einem reellen Faktor mit zeitabhängig variablem Betrag - einen komplexen Phasenfaktor der Form

$$\exp(-j * w * (t-x))$$

enthält, wobei t die Zeit ist, w proportional zu dem Signalweg d ist, den das Synchronisationssignal (sync) zwischen den Hochfrequenzbausteinen (10, 12) zurückzulegen hat, und x ein beliebiger Wert aus dem Intervall [0, T] und T die Dauer der Messperiode ist.

4. Radarsensor nach Anspruch 3, bei dem der der Sendeteil (16) dazu ausgebildet ist, die Frequenz des Sendesignals (TX) während der Dauer der Messperiode T rampemförmig mit einem Frequenzhub B zu modulieren, und bei dem der komplexe Phasenfaktor gegeben ist durch

$$\exp(-j * 2 * pi * (1/T) * (t - x) * b)$$

mit b = d*2B/c, wobei c die Ausbreitungsgeschwindigkeit des Synchronisationssignals ist, und d die Länge des Signalweges des Synchronisationssignals (sync) von einem Hochfrequenzbaustein zum anderen ist.

5. Radarsensor nach Anspruch 3 oder 4, mit x = T/2.

**Claims**

1. FMCW radar sensor having a plurality of radio-frequency modules (10, 12) which are synchronized with one another by means of a synchronization signal (sync) and comprise at least two radio-frequency modules (10, 12) which are spatially separate from one another and each have a transmitting part (16) for transmitting a transmission signal (TX) whose frequency has been modulated and/or a receiving part (20) for receiving a radar echo (E), wherein at least two of the radio-frequency modules each have a receiving part and each receiving part (20) is assigned a mixer (22), which generates an intermediate frequency signal (Z1, Z2) by mixing the received signal (RX) with a portion of the transmission signal (TX), and an evaluation unit (24, 34), and the evaluation unit (24, 34) is designed to record the intermediate frequency signal (Z1, Z2) as a function of the time (t) over a measurement period (T) and to subject the time signal (S1, S2) obtained in this manner to a Fourier transform, **characterized in that** at least one (34) of the evaluation units is designed to window the time signal (S1) before the Fourier transform using a complex-valued window function (V) in order to compensate for a propagation time difference of the synchronization signal (sync) between the receiving parts (20) .

2. Radar sensor according to Claim 1, in which at least two radio-frequency modules (10, 12) have both a transmitting part (16) and a receiving part (20), and the associated evaluation units (24, 34) each have a window module (36) which can be changed over between the complex-valued window function and a purely real window function.

3. Radar sensor according to Claim 1 or 2, in which the windowing involves multiplying the time signal (S2) by a time-dependent window function (V) which - optionally in addition to a real factor with an absolute value that is variable on the basis of time - contains a complex phase factor of the form

$$\exp(-j*w*(t-x))$$

wherein t is the time, w is proportional to the signal path d which needs to be covered by the synchronization signal (sync) between the radio-frequency modules (10, 12), and x is any desired value from the range [0, T] and T is the duration of the measurement period.

4. Radar sensor according to Claim 3, in which the transmitting part (16) is designed to modulate the frequency of the transmission signal (TX) in a ramp-shaped manner with a frequency swing B during the duration of the measurement period T, and in which the complex phase factor is given by

$$\exp(-j*2*pi*(1/T)*(t-x)*b)$$

with b = d*2B/c, wherein c is the propagation speed of the synchronization signal, and d is the length of the signal path of the synchronization signal (sync) from one radio-frequency module to the other.

5. Radar sensor according to Claim 3 or 4, with x = T/2.

**Revendications**

1. Capteur radar FMCW comprenant une pluralité de composants à haute fréquence (10, 12) qui sont synchronisés entre eux par un signal de synchronisation (sync) et qui comprennent au moins deux composants à haute fréquence (10, 12) qui sont séparés spatialement l'un de l'autre et qui comportent chacun une partie d'émission (16) destinée à émettre un signal d'émission (TX) modulé en fréquence et/ou une partie de réception (20) destinée à recevoir un écho radar (E), au moins deux des composants à haute fréquence comportant chacun une partie de réception et chaque partie de réception (20) étant associée à un mélangeur (22), qui génère un signal de fréquence intermédiaire (Z1, Z2) en mélangeant le signal reçu (RX) à une fraction du signal d'émission (TX), et à une unité d'évaluation (24, 34) et l'unité d'évaluation (24, 34) étant conçue pour enregistrer le signal de fréquence intermédiaire (Z1, Z2) sur une période de mesure (T) en fonction du temps (t) et pour soumettre le signal temporel (S1, S2) ainsi obtenu à une transformation de Fourier, **caractérisé en ce qu'**au moins une (34) des unités d'évaluation est conçue pour fenêtrer le signal temporel (S1) avant la transformation de Fourier avec une fonction de fenêtrage à valeurs complexes (V) afin de compenser une différence de temps de propagation du signal de synchronisation (sync) entre les parties de réception (20).

2. Capteur radar selon la revendication 1, dans lequel au moins deux composants à haute fréquence (10, 12) comportent aussi bien une partie d'émission (16) qu'une partie de réception (20) et les unités d'évaluation associées (24, 34) comportent chacune un module de fenêtrage (36) qui peut commuter entre la fonction de fenêtrage à valeurs complexes et une fonction de fenêtrage purement réelle.

3. Capteur radar selon la revendication 1 ou 2, dans lequel le fenêtrage consiste à multiplier le signal temporel (S2) par une fonction de fenêtrage (V) dépendant du temps qui contient, éventuellement en plus d'un facteur réel dont la valeur absolue varie dans le temps, un facteur de phase complexe de la forme

$$\exp(-j*w*(t-x))$$

t étant le temps, w étant proportionnel au trajet de signal d que le signal de synchronisation (sync) doit parcourir entre les composants à haute fréquence (10, 12), et x étant une valeur quelconque de l'intervalle [0, T] et T étant la durée de la période de mesure.

4. Capteur radar selon la revendication 3, dans lequel la partie d'émission (16) est conçue pour moduler la fréquence du signal d'émission (TX) en forme de rampe avec un écart de fréquence B pendant la durée de la période de mesure T, et dans lequel le facteur de phase complexe est donné par

$$\exp(-j*2*pi*(1/T)*(t-x)*b)$$

b = d*2B/c, c étant la vitesse de propagation du signal de synchronisation, et d étant la longueur du trajet de signal du signal de synchronisation (sync) d'un composant à haute fréquence à l'autre.

5. Capteur radar selon la revendication 3 ou 4, avec x = T/2.

Fig. 1

Fig. 2

Fig. 3

Fig. 4

**IN DER BESCHREIBUNG AUFGEFÜHRTE DOKUMENTE**

**In der Beschreibung aufgeführte Patentdokumente**

- DE 69612252 T2